(19) Europäisches Patentamt

European Patent Office

Office européen des brevets

(11) **EP 4 006 581 A1**

(12) **EUROPEAN PATENT APPLICATION**

(43) Date of publication:
**01.06.2022 Bulletin 2022/22**

(21) Application number: **21201730.5**

(22) Date of filing: **08.10.2021**

(51) International Patent Classification (IPC):
**G01S 7/54** (2006.01)          **G01S 15/06** (2006.01)
**G01S 15/08** (2006.01)

(52) Cooperative Patent Classification (CPC):
**G01S 7/54; G01S 15/08;** G01S 15/89; G01S 15/931

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.11.2020 CN 202011356761**

(71) Applicants:
• **HONGFUJIN PRECISION ELECTRONS (YANTAI) CO., LTD.**
**pilot Free Trade Zone (CN)**

• **Hon Hai Precision Industry Co., Ltd.**
**New Taipei City (TW)**

(72) Inventors:
• **LIAO, YING-LIANG**
**New Taipei (TW)**
• **TANG, HSUEH-YUNG**
**New Taipei (TW)**
• **YEH, CHIA-LUN**
**New Taipei (TW)**

(74) Representative: **Zaboliene, Reda**
**Metida**
**Business center Vertas**
**Gyneju str. 16**
**01109 Vilnius (LT)**

(54) **ULTRASONIC RANGING DEVICE, ULTRASONIC RANGING METHOD, AND CONTROLLER**

(57)     An ultrasonic ranging device includes an ultrasonic transmitter, an ultrasonic transmitting/receiving circuit, and a controller. The ultrasonic transmitter includes transmitting channels arranged in a ring. Each of the transmitting channels transmits a first ultrasonic wave. The first ultrasonic wave is reflected by a target object, the reflection of the first ultrasonic wave is defined as a second ultrasonic wave. Each of the transmitting channels receives the second ultrasonic wave. The ultrasonic transmitting/receiving channel controls the ultrasonic transmitter to transmit the first ultrasonic wave or receive the second ultrasonic wave by switching between working modes. The controller obtains a distance to the target object according to a transmitting time of the first ultrasonic wave and a receiving time of the second ultrasonic wave.

FIG. 2

EP 4 006 581 A1

**Description**

FIELD

The subject matter herein generally relates to ultrasonic ranging technique, and particularly relates to an ultrasonic ranging device, an ultrasonic ranging method, and a controller.

BACKGROUND

A conventional ultrasonic ranging device includes a single ultrasonic probe for transmitting an ultrasonic wave. The ultrasonic ranging device is configured to calculate a distance to a target object according to the round-trip time with a known sound velocity. In single ultrasonic probe, the probe curvature has determined the focal point position and limited its application field, which makes it difficult to obtain target distances over a large field. The ultrasonic wave reflected by the target object may diverge if the target object is too far from the focal point, which reduces a resolution of the ultrasonic ranging device.

Therefore, there is room for improvement in the art.

BRIEF DESCRIPTION OF THE DRAWINGS

Implementations of the present disclosure will now be described, by way of embodiment, with reference to the attached figures.

FIG. 1 is a schematic diagram of an ultrasonic ranging device and a target object in an embodiment of the present disclosure.

FIG. 2 is a module diagram of the ultrasonic ranging device in the embodiment of the present disclosure.

FIG. 3 is a flow chart of an ultrasonic ranging method in the embodiment of the present disclosure.

FIG. 4 is a schematic diagram of transmitting-delay of a plurality of transmitting channels in the embodiment of the present disclosure.

FIG. 5 is a schematic diagram of a first ultrasonic wave transmitted and focused by an ultrasonic transmitter in the embodiment of the present disclosure.

FIG. 6 is a schematic diagram of the first ultrasonic wave transmitted by an ultrasonic transmitter in another embodiment.

FIG. 7 is a schematic diagram of receiving-delay of the plurality of transmitting channels in the embodiment of the present disclosure.

FIG. 8 is a schematic diagram of the ultrasonic transmitter receiving a second ultrasonic wave in the embodiment of the present disclosure.

FIG. 9 is a schematic diagram of obtaining distance to the target object in two ranging periods in the embodiment of the present disclosure.

FIG. 10 is a schematic diagram of obtaining the distance to the target object in three ranging periods in another embodiment of the present disclosure.

DETAILED DESCRIPTION

It will be appreciated that for simplicity and clarity of illustration, where appropriate, reference numerals have been repeated among different figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

The term "coupled" is defined as connected, whether directly or indirectly through intervening components and is not necessarily limited to physical connections. The connection can be such that the objects are permanently connected or releasably connected. The term "comprising" when utilized, means "including, but not necessarily limited to"; it specifically indicates open-ended inclusion or membership in the so-described combination, group, series, and the like.

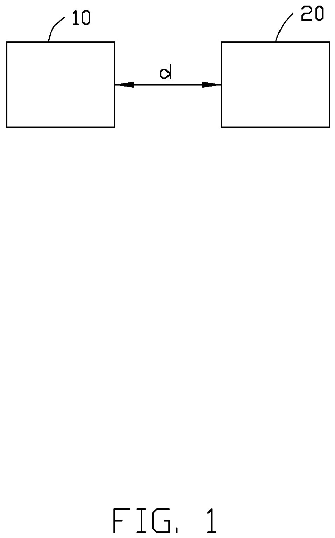

Referring to FIG. 1, an ultrasonic ranging device 10 is configured to establish a distance to a target object 20. In the present embodiment, the ultrasonic ranging device 10 is configured to transmit ultrasonic waves. The ultrasonic waves will be reflected by the target object 20 when they reach the target object 20, wherein the ultrasonic waves reflected by the target object 20 can be received by the ultrasonic ranging device 10. The distance d between the target object 20 and the ultrasonic ranging device 10 is calculated according to a time difference between transmitting the ultrasonic waves and receiving the ultrasonic waves with a known sound velocity.

The ultrasonic ranging device 10 can be assembled in intelligent devices as a functional module for ranging. For example, the ultrasonic ranging device 10 may be assembled in a vehicle or a carrier to construct a map, reveal obstacles in a driving path when driving, and obtain distances to the obstacles.

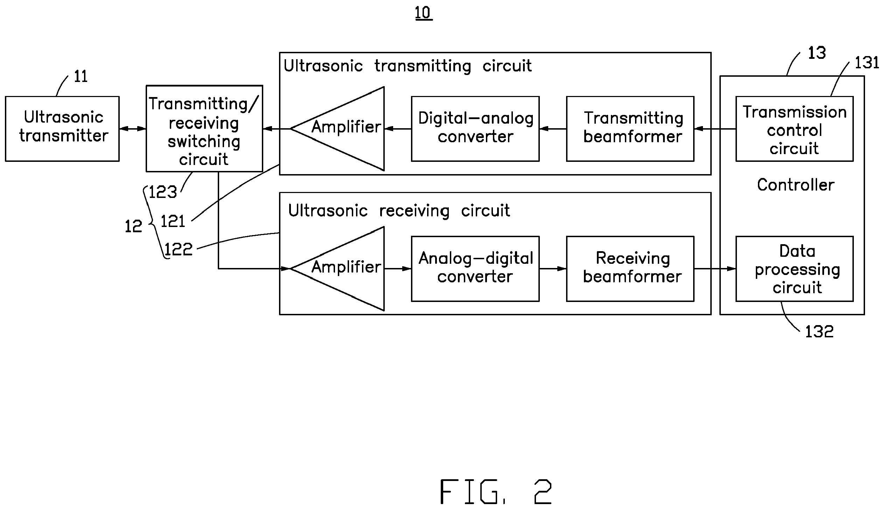

Referring to FIG. 2, the ultrasonic ranging device 10 includes an ultrasonic transmitter 11, an ultrasonic transmitting/receiving circuit 12, and a controller 13. The ultrasonic transmitting/receiving circuit 12 is electrically connected with the ultrasonic transmitter 11 and the controller 13.

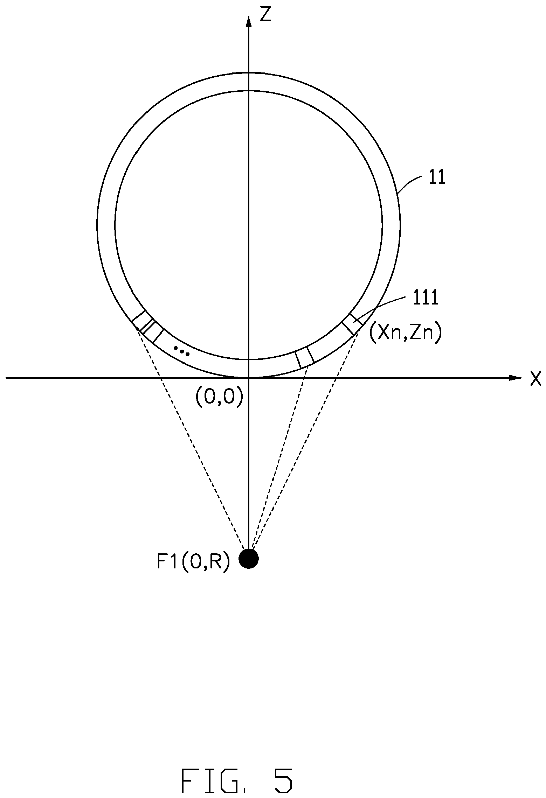

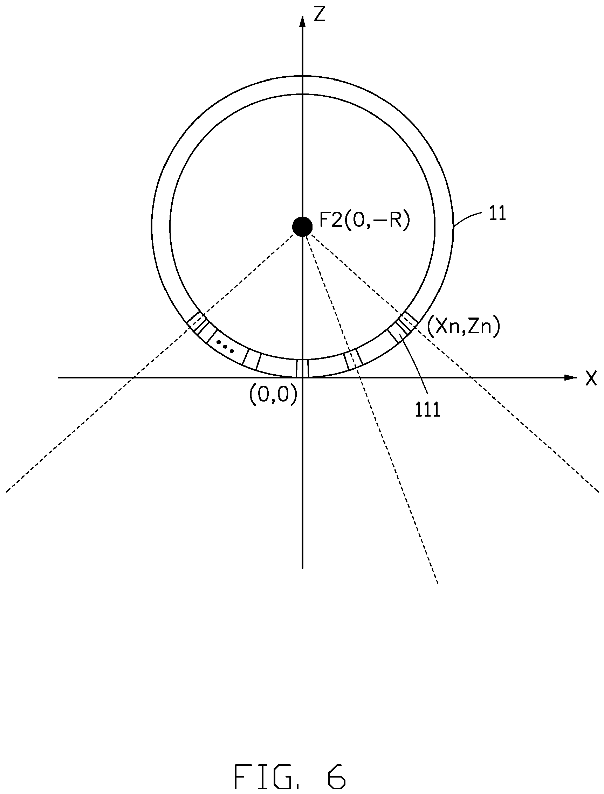

The ultrasonic transmitter 11 includes a plurality of transmitting channels 111 (shown in FIG. 5 and FIG. 6). The transmitting channels 111 can be on a same carrier. The transmitting channels 111 are arranged in a ring or other geometry. Each of the transmitting channels 111 is configured to transmit a first ultrasonic wave in a radial direction, away from the center of the ring. The first ultrasonic waves transmitted by all the transmitting channels 111 thus cover a 360 degree range from the ultrasonic ranging device 10.

The first ultrasonic wave is reflected by the target object 20 when it reaches the target object 20. In the present embodiment, the reflection of the first ultrasonic wave by the target object 20 is defined as a second ultrasonic wave. Each of the transmitting channels 111 in the ultrasonic transmitter 11 can receive the second ultrasonic wave.

A ranging period is defined as the period of time between one transmission of the first ultrasonic wave and the reception of the corresponding second ultrasonic wave. The ultrasonic ranging device 10 may work during numerous ranging periods. In each of the ranging periods, a number of the transmitting channels 111 which transmit the first ultrasonic waves can be controlled according to actual needs. In general, the larger the range, the greater the number, and the smaller the range, the less can be the number. In addition, the ultrasonic focal point can be controlled by adjusting the time-delay at each channel according to the application needs.

The ultrasonic transmitting/receiving circuit 12 includes an ultrasonic transmitting circuit 121, an ultrasonic receiving circuit 122, and a transmitting/receiving switching circuit 123 electrically connected to the ultrasonic transmitting circuit121 and the ultrasonic receiving circuit122. The ultrasonic transmitting circuit 121 includes a transmitting beamformer, an amplifier, and a digital-analog converter electrically connected to the transmitting beamformer and the amplifier. The ultrasonic receiving circuit122 includes a receiving beamformer, an amplifier, and an analog-digital converter electrically connected to the receiving beamformer and the amplifier. The amplifiers in the ultrasonic transmitting circuit 121 and the ultrasonic receiving circuit 122 are electrically connected to the transmitting/receiving switching circuit 123. The controller 13 includes a transmission control circuit 131 and a data processing circuit 132 electrically connected to each other. The transmission control circuit 131 is electrically connected to the ultrasonic transmitting circuit121, and the data processing circuit 132 is electrically connected to the ultrasonic receiving circuit 122.

The transmission control circuit 131 is configured to output a command to control the ultrasonic transmitting circuit 121 to activate at least one or more transmitting channel 111 to generate an ultrasonic transmission signal. The transmitting/receiving switching circuit 123 is configured to switch to a transmitting state to transmit the ultrasonic transmission signal to at least one transmitting channel 111 to transmit the first ultrasonic wave. The second ultrasonic wave reflected by the target object 20 is received by the at least one transmitting channel 111. The transmitting/receiving switching circuit 123 is configured to switch to a receiving state, so that the second ultrasonic wave when received is converted into a signal by the ultrasonic receiving circuit 122, wherein the signal is recognizable to the data processing circuit 132. The data processing circuit 132 can control to activate at least one or more transmitting channel 111 to receive second ultrasonic wave and calculate the distance of the target object 20 from the ultrasonic ranging device 10 according to a transmitting time of the first ultrasonic wave and a receiving time of the second ultrasonic wave, similar to a time-of-flight calculation.

The embodiment of the present disclosure further provides an ultrasonic ranging method applied to the ultrasonic ranging device 10 (or applied to the controller 13).

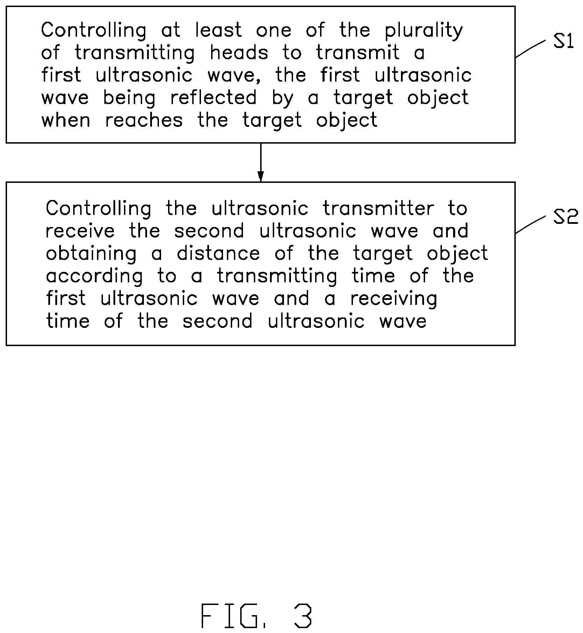

Referring to FIG. 3, a flowchart of the ultrasonic ranging method is presented in accordance with an example embodiment which is being thus illustrated. The example method is provided by way of example, as there are a variety of ways to carry out the method. The method described below can be carried out using the configurations illustrated in FIGS. 1 and 2, for example, and various elements of these figures are referenced in explaining example method. Each block shown in FIG. 3 represents one or more processes, methods or subroutines, carried out in the exemplary method. Additionally, the illustrated order of blocks is by example only and the order of the blocks can change according to the present disclosure. The exemplary method can begin at block S1.

At block S1, controlling at least one of the plurality of transmitting channels 111 to transmit a first ultrasonic wave, the first ultrasonic wave being reflected by a target object 20 when reaches the target object 20. The reflection of the first ultrasonic wave by the target object 20 is defined as a second ultrasonic wave.

At block S2, controlling the ultrasonic transmitter 11 to receive the second ultrasonic wave and obtaining a distance of the target object 20 according to a transmitting time of the first ultrasonic wave and a receiving time of the second ultrasonic wave.

At block S1, the first ultrasonic wave transmitted by the ultrasonic transmitter 11 can be focused or can be divergent.

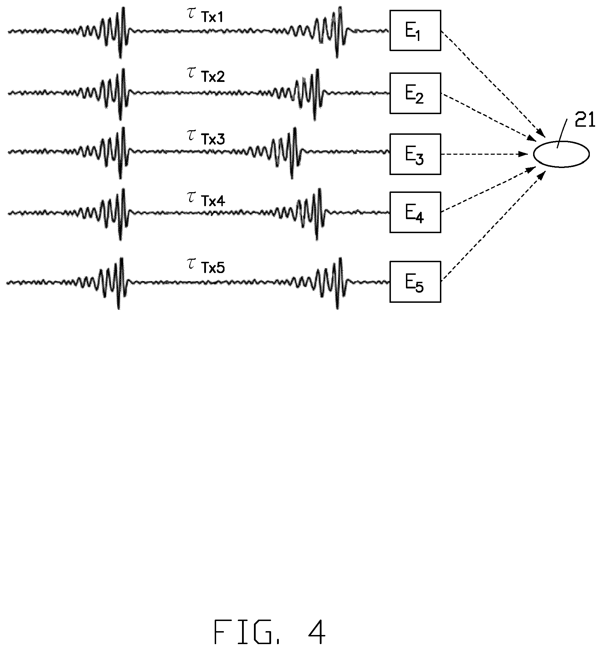

Referring to FIG. 4, in the present embodiment, parts of the transmitting channels 111 in the ultrasonic transmitter 11 transmit a plurality of the first ultrasonic waves in one ranging period. If the ultrasonic transmitter 11 transmits the first ultrasonic waves focused, all focal points of the first ultrasonic waves are obviously outside the ring.

The transmitting beamformer in transmitting circuit 121 is configured to obtain transmitting-delay times of the transmitting channels 111 to transmit the first ultrasonic waves according to distances between the focal point and each of the transmitting channels. The controller 13 is further configured to control the transmitting channels 111 to transmit the first ultrasonic waves in turn according to the transmitting-delay time.

Referring to FIG. 4, in the present embodiment, five transmitting channels (transmitting channels $E_1$, $E_2$, $E_3$, $E_4$, and $E_5$) in the ultrasonic transmitter 11 transmit first ultrasonic waves during one ranging period. In the one ranging period, the first ultrasonic waves from the transmitting channels $E_1$, $E_2$, $E_3$, $E_4$, and $E_5$ need to be simultaneously focused on a detection point 21 on the target object 20.

The distances of the detection point 21 to the transmitting channels $E_1$, $E_2$, E3, E4, and $E_5$ are defined as $Tx\_path_1$, Tx_path2, Tx_path3, Tx_path4, and Tx_paths. The transmitting-delay times of the transmitting channels $E_1$, $E_2$, $E_3$, $E_4$, and $E_5$ are defined as $\tau_{Tx1}$, $\tau_{Tx2}$, $\tau_{Tx3}$, $\tau_{Tx4}$, and $\tau_{Tx5}$. As can be seen from FIG. 5, the distances are different. The first ultrasonic waves from the transmitting channels $E_1$, $E_2$, $E_3$, $E_4$, and $E_5$ all have a same transmitting speed c. By controlling values of the transmitting-delay times $\tau_{Tx1}$, $\tau_{Tx2}$, $\tau_{Tx3}$, $\tau_{Tx4}$, and $\tau_{Tx5}$, the first ultrasonic waves from the transmitting channels $E_1$, $E_2$, $E_3$, $E_4$, and $E_5$ can be controlled to reach the detection point 21 at the same time (the transmitting-delay time of the transmitting channel 111 which is closest to the detection point 21 is longer, so that the first ultrasonic wave is transmitted later, and the transmitting-delay time of the transmitting channel 111 farthest from the detection point 21 is shorter, so that the first ultrasonic wave is transmitted earlier).

Referring to FIG. 5, a plane cartesian coordinate system including a Z-axis and an X-axis is established. The Z-axis of the plane cartesian coordinate system is a straight line connecting a focal point F1 of the first ultrasonic waves and the center of the ring comprising the transmitting channels 111. The X-axis of the plane cartesian coordinate system is a straight line perpendicular to the Z axis, tangential to the ring comprising the transmitting channels 111, and close to the transmitting channels 111 transmitting the first ultrasonic waves. A coordinate of an intersection of the X-axis and Z-axis is defined as (0,0), a coordinate of the focal point F1 is defined as (0, R), coordinates of the transmitting channels 111 transmitting the first ultrasonic waves are defined as (Xn, Zn), $1 \leq n \leq 5$, N being an integer.

The transmitting delay times are calculated by the following formula (1):

$$\tau_{Txn} = \frac{Tx\_path_n}{c} = \frac{\sqrt{(0 - X_n)^2 + (R - Z_n)^2}}{c} \qquad \text{(formula (1))}$$

Referring to FIG. 6, in another embodiment, the ultrasonic transmitter 11 transmits the first ultrasonic waves in a divergent manner, wherein a virtual focal point F2 of the first ultrasonic waves is at the center of the ring formed by the transmitting channels 111.

A plane cartesian coordinate system including a Z-axis and an X-axis is established. The Z-axis of the plane cartesian coordinate system is a straight line passing through the virtual focal point F2, and the X-axis of the plane cartesian coordinate system is a straight line perpendicular to the Z-axis, tangential to the ring formed by the transmitting channels 111 and close to the transmitting channels 111 transmitting the first ultrasonic waves. A coordinate of an intersection of the X-axis and Z-axis is defined as (0,0), a coordinate of the virtual focal point F2 is defined as (0, - R), coordinates of the transmitting channels 111 transmitting the first ultrasonic waves are defined as (Xn, Zn), $1 \leq n \leq 5$, N being an integer.

In the modified embodiment, the transmitting-delay times are calculated by the following formula (2):

$$\tau_{Txn} = \frac{Tx\_path_n}{c} = \frac{\sqrt{(X_n - 0)^2 + (Z_n + R)^2}}{c} \qquad \text{(formula (2))}$$

The target object 20 reflects the first ultrasonic waves received, as the second ultrasonic waves received by the transmitting channels 111 transmitting the first ultrasonic waves.

At block S2, the second ultrasonic waves received are dynamically focused. On transmit beamforming, the fist ultrasonic wave is fired only once to the specified position, as for the receiving beamforming, the second ultrasonic waves are continuously stored on each channels and can be dynamically updated. The receiving beamformer in receiving circuit 122 is configured to obtain receiving-delay times of the transmitting channels 111 receiving the second ultrasonic waves according to the distance between the locations in imaging area and each of channels. The controller 13 is further configured to control the transmitting channels 111 to receive the second ultrasonic waves in turn according to the receiving-delay times.

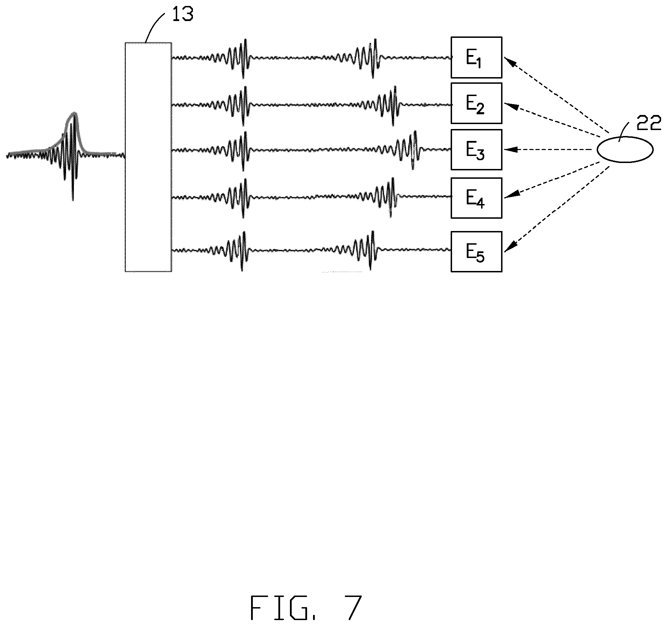

Referring to FIG. 7, in the present embodiment, five transmitting channels (the transmitting channels $E_1$, $E_2$, $E_3$, $E_4$, and $E_5$) in the ultrasonic transmitter 11 are configured to receive second ultrasonic waves in one ranging period. In the one ranging period, the controller 13 is configured to receive and identify the signals representing the second ultrasonic waves simultaneously. The receiving-delay times can be obtained by calculating the distances of a detection point 22 to each of the transmitting channels 111 receiving the second ultrasonic waves. Note that the detection point 22 is one of interesting point within imaging area, its positions can be changed according to the application needs and thus the receiving-delay time will change accordingly. The distances between the detection point 22 and each of the transmitting channels $E_1$, $E_2$, $E_3$, E4, and $E_5$ are defined as $Rx\_path_1$, Rx_path2, Rx_path3, Rx_path4, and Rx_paths. The receiving-delay times of the transmitting channels $E_1$, $E_2$, $E_3$, $E_4$, and $E_5$ are defined as $\tau_{Rx1}$, $\tau_{Rx2}$, $\tau_{Rx3}$, $\tau_{Rx4}$, and $\tau_{Rx5}$. As can be seen from FIG. 7, the distances of the detection point 22 to each of the transmitting channels $E_1$, $E_2$, $E_3$, $E_4$, and $E_5$ are not the same. The transmitting channels $E_1$, $E_2$, $E_3$, $E_4$, and $E_5$ have different arrival time for receiving the second ultrasonic waves since the second ultrasonic waves have a same transmitting speed c.

Although the transmitting channels $E_1$, $E_2$, $E_3$, $E_4$, and $E_5$ have different arrival time before receiving the second ultrasonic waves, the controller 13 can be controlled to receive the second ultrasonic waves simultaneously by adjusting values of the receiving-delay times $\tau_{Rx1}$, $\tau_{Rx2}$, $\tau_{Rx3}$, $\tau_{Rx4}$, and $\tau_{Rx5}$. After the receive delay time of channel data are properly adjusted, all of signals are summed. This is so called as delay-and-sum beamformer. This process will be repeated until all of detection points in imaging area are completed.

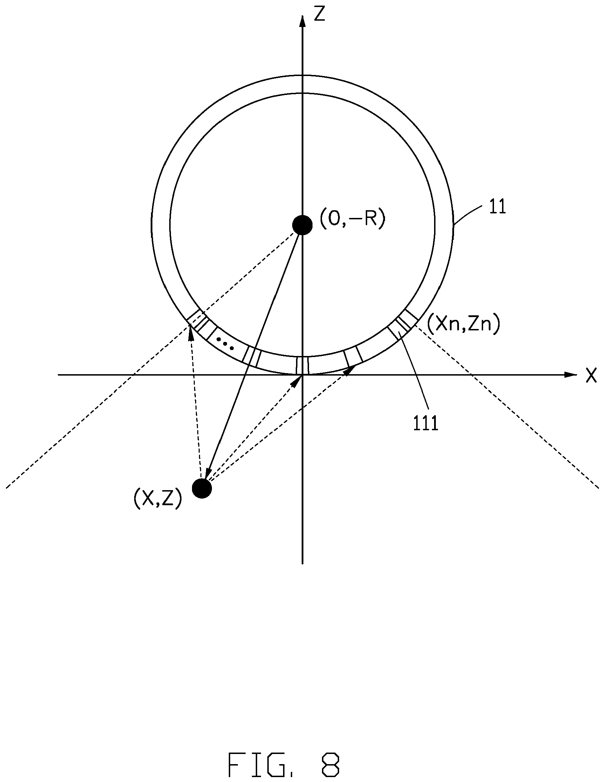

Referring to FIG. 8, a plane cartesian coordinate system is established as shown in FIG. 6. Coordinates of any detection point within a ranging range (defined by dashed straight lines in FIG. 8) are defined as (x, z), wherein the receiving-delay times are calculated according to the following formulas (3), (4), and (5):

$$\tau_{Txn} = \frac{Tx\_path_n}{c} = \frac{\sqrt{(X-0)^2 + (Z+R)^2}}{c} \quad \text{(formula (3))}$$

$$\tau_{Rxn} = \frac{Rx\_path_n}{c} = \frac{\sqrt{(X - X_n)^2 + (Z - Z_n)^2}}{c} \quad \text{(formula (4))}$$

$$\tau(X, Z, n) = \tau_{Txn} + \tau_{Rxn} \quad \text{(formula (5))}$$

At block S1, if all of the transmitting channels 111 are controlled to transmit the first ultrasonic waves in a divergent manner during the ranging period, the possible range of the ultrasonic ranging device 10 can be 360°, which is conducive to improve a ranging speed, however a spatial resolution needs to be improved. In block S1, if the transmitting channels 111 are controlled to transmit the first ultrasonic waves focused during the ranging period, the target object 20 far away from the ultrasonic ranging device 10 can be measured, and the spatial resolution is significantly improved, however the detection area is reduced.

In the present embodiment, the target object 20 defines a plurality of detection points. The ultrasonic ranging device 10 repeats block S1 and block S2 until completing the ranging of all of the detection points.

In the present embodiment, the distance to the target object 20 is obtained through a plurality of the ranging periods. The transmitting channels 111 are controlled to transmit different forms (divergent or focused) of first ultrasonic waves during different ranging periods, and the distance of the target object 20 is obtained by compounding ranging information in each of the ranging periods, which is conducive to enabling the ultrasonic ranging device 10 to achieve beneficial effects of both the first ultrasonic waves being divergent and being focused.

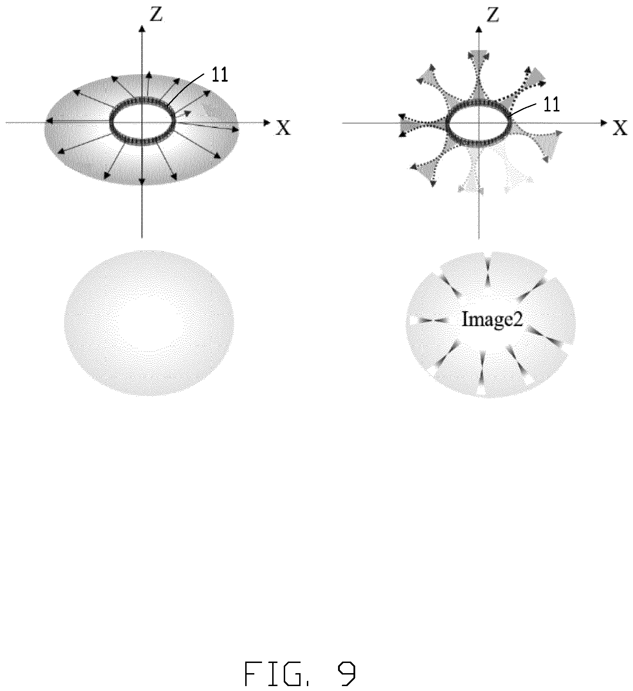

Referring to FIG. 9, in the present embodiment, in a first ranging period, all of the transmitting channels 111 are controlled to transmit the first ultrasonic waves in a divergent manner, and first ranging information d1 is calculated according to the second ultrasonic waves received. In a second ranging period, all of the transmitting channels 111 are controlled to transmit a plurality of first ultrasonic wave groups, wherein each of the first ultrasonic wave groups includes the first ultrasonic wave which is focused. That is, the transmitting channels 111 are divided into a plurality of groups, each of the groups includes the transmitting channels 111, wherein the transmitting channels 111 in a same group are adjacent, the first ultrasonic waves from the transmitting channels 111 in the same group are focused to a same point, and the first ultrasonic waves from the transmitting channels 111 in different groups are focused to different points. Second ranging information d2 is obtained according to the second ultrasonic waves received. The distance d of the target object 20 can be obtained by averaging the first ranging information d1 and the second ranging information d2.

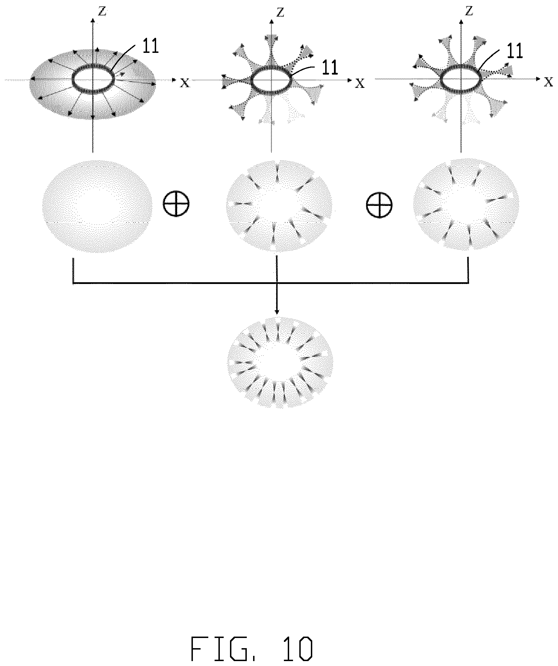

Referring to FIG. 10, in another embodiment, in a first ranging period, all of the transmitting channels 111 are controlled to transmit the first ultrasonic waves divergently, and first ranging information d1 is calculated according to the second ultrasonic waves received. In a second ranging period, all of the transmitting channels 111 are controlled to transmit a plurality of first ultrasonic wave groups, wherein each of the first ultrasonic wave groups includes the first ultrasonic wave which is focused. That is, the transmitting channels 111 are divided into a plurality of groups, each of the groups includes the transmitting channels 111, wherein the transmitting channels 111 in a same group are adjacent, the first ultrasonic waves from the transmitting channels 111 in the same group are focused to a same point, and the first ultrasonic waves from the transmitting channels 111 in different groups are focused to different points. Second ranging information d2 is obtained according to the second ultrasonic waves received. In a third ranging period, all of the transmitting channels 111 are controlled to transmit a plurality of first ultrasonic wave groups, wherein each of the first ultrasonic wave groups includes the first ultrasonic wave which is focused. Third ranging information d3 is obtained according to the second ultrasonic waves received. The distance d of the target object 20 can be obtained by averaging the first ranging information d1, the second ranging information d2, and the third ranging information d3.

In another embodiment, accuracy of the distance d of the target object 20 can be further improved by increasing a ranging period for transmitting the first ultrasonic waves which are focused (the third ranging period).

In other embodiments, more ranging periods can be added to transmit the first ultrasonic waves which are focused to obtain more ranging information, and more ranging information can be averaged to obtain the distance d of the target object 20.

The ultrasonic ranging device 10, the ultrasonic ranging method, and the controller 13 in the present embodiment can obtain ranging information (or positional information) of the target object 20 in a complete range (360°) in one ranging period by setting the ultrasonic transmitter 11 including the plurality of transmitting channels 111 arranged in a ring, which is conducive to improving the ranging speed of the ultrasonic ranging device 10. Further, the number of the transmitting channels 111 transmitting the first ultrasonic waves is adjustable (can be one or more), so that a detectable range is adjustable, a detection mode of the ultrasonic ranging device 10 can match actual detection needs, and the detection mode is more flexible.

The first ultrasonic waves which are focused can be obtained according to the transmitting-delay times, which focuses the first ultrasonic waves transmitted during a same ranging period onto the target object 20 simultaneously, so that an energy density of the first ultrasonic waves is enhanced and the spatial resolution is improved. Moreover, the first ultrasonic waves which are focused can be projected to a further distance, which is conducive to detecting a further target object 20.

The second ultrasonic waves which are focused can be obtained according to the receiving-delay times, which focuses the second ultrasonic waves received in the same ranging period onto the transmitting channels 111 simultaneously, so that an energy density of the second ultrasonic waves is enhanced, the spatial resolution is improved, and the distance calculated by the controller 13 is more accurate.

The first ultrasonic waves transmitted divergently can also be obtained according to the transmitting-delay time. The divergent first ultrasonic waves can significantly expand the range of the ultrasonic ranging device 10 during one ranging period. Therefore, in a case that a specific range is needed to be detected, it is conducive to reduce a number of ranging periods by expanding the range of the ultrasonic ranging device 10 during one ranging period. That is, it is conducive to improving the ranging speed.

Different ranging information can be obtained in different ranging periods by controlling the ultrasonic ranging device 10 to transmit different forms of the first ultrasonic waves (focused or divergent) in the different ranging periods. The different ranging information obtained in the different ranging periods is used to obtain the distance of the target object 20, which is conducive to achieve the beneficial effects of the first ultrasonic waves being focused and the first ultrasonic waves being divergent at the same time. That is, it is conducive for the ultrasonic ranging device 10 to achieve a high resolution, an accurate distance, and a high ranging speed.

It is to be understood, even though information and advantages of the present embodiments have been set forth in the foregoing description, together with details of the structures and functions of the present embodiments, the disclosure is illustrative only. Changes may be made in detail, especially in matters of shape, size, and arrangement of parts within the principles of the present embodiments to the full extent indicated by the plain meaning of the terms in which the appended claims are expressed.

**Claims**

1. An ultrasonic ranging device (10), comprising:

   an ultrasonic transmitter (11) comprising a plurality of transmitting channels (111) arranged in a ring, each of the plurality of transmitting channels (111) being configured to transmit a first ultrasonic wave outside of the ring, the first ultrasonic wave reflected by a target object (20) being defined as a second ultrasonic wave, each of the plurality of transmitting channels (111) being further configured to receive the second ultrasonic wave; an ultrasonic transmitting/receiving circuit (12) electrically connected to the ultrasonic transmitter (11), the ultrasonic transmitting/receiving circuit (12) being configured to control the ultrasonic transmitter (11) to transmit the first ultrasonic wave or receive the second ultrasonic wave by switching working modes; and a controller (13) electrically connected to the ultrasonic transmitting/receiving circuit (12), the controller (13) being configured to control the plurality of transmitting channels (111) to transmit the first ultrasonic wave by the ultrasonic transmitting/receiving channel, the controller (13) being further configured to obtain a distance to the target object (20) according to a transmitting time of the first ultrasonic wave and a receiving time of the second ultrasonic wave with a known sound velocity.

2. The ultrasonic ranging device (10) of claim 1, wherein the first ultrasonic wave transmitted by the plurality of transmitting channels (111) is focused on a same focal point.

3. The ultrasonic ranging device (10) of claim 1, wherein the first ultrasonic wave is divergent and covers a ranging range of the target object (20) located.

4. An ultrasonic ranging method applied in an ultrasonic ranging device (10), the ultrasonic ranging device (10) comprising an ultrasonic transmitter (11) comprising a plurality of transmitting channels (111) arranged in a ring, the ultrasonic ranging method comprising:

   controlling the plurality of transmitting channels (111) to transmit a first ultrasonic wave to at least one detection point of a target object (20), the first ultrasonic wave reflected by the target object (20) being defined as a second ultrasonic wave; and
   controlling the ultrasonic transmitter (11) to receive the second ultrasonic wave and obtaining a distance to the target object (20) according to a transmitting time of the first ultrasonic wave and a receiving time of the second ultrasonic wave with a known sound velocity.

5. The ultrasonic ranging method of claim 4, wherein the step of controlling the plurality of transmitting channels (111) to transmit a first ultrasonic wave comprises:

   obtaining transmitting-delay times of the plurality of transmitting channels (111) according to distances between the plurality of transmitting channels (111) and the at least one detection point; and
   controlling the plurality of transmitting channels (111) to transmit the first ultrasonic wave according to the transmitting-delay times.

6. The ultrasonic ranging method of claim 5, wherein the step of controlling the plurality of transmitting channels (111) to transmit the first ultrasonic wave according to the transmitting-delay times comprises:
   controlling the plurality of transmitting channels (111) to transmit the first ultrasonic wave focused or divergent according to the transmitting-delay times.

7. The ultrasonic ranging method of claim 6, wherein the step of obtaining a distance to the target object (20) according to a transmitting time of the first ultrasonic wave and a receiving time of the second ultrasonic wave comprises:

   obtaining the distance to the target object (20) according to a transmitting time of the first ultrasonic wave focused and a receiving time of the second ultrasonic wave; or
   obtaining the distance to the target object (20) according to a transmitting time of the first ultrasonic wave divergent and a receiving time of the second ultrasonic wave; or
   obtaining first ranging information of the target object (20) according to a transmitting time of the first ultrasonic wave focused and a receiving time of the second ultrasonic wave during a first ranging period, obtaining second ranging information of the target object (20) according to a transmitting time of the first ultrasonic wave divergent and a receiving time of the second ultrasonic wave during a second ranging period, and obtaining the distance to the target object (20) according to the first ranging information and the second ranging information.

8. The ultrasonic ranging method of claim 7, wherein the step of obtaining the distance to the target object (20) according to the first ranging information and the second ranging information comprises:
   obtaining the distance to the target object (20) according to the first ranging information obtained in one first ranging period and the second ranging information obtained in a plurality of the second ranging periods.

9. The ultrasonic ranging method of claim 4, wherein the step of controlling the ultrasonic transmitter (11) to receive the second ultrasonic wave comprises:

obtaining receiving-delay times of the plurality of transmitting channels (111) according to distances between the plurality of transmitting channels (111) and the at least one detection point; and
controlling the plurality of transmitting channels (111) to receive the second ultrasonic wave according to the receiving-delay times.

10. A controller (13) applied in an ultrasonic ranging device (10), the ultrasonic ranging device (10) comprising an ultrasonic transmitter (11) comprising a plurality of transmitting channels (111) arranged in a ring, the controller (13) comprising:

a transmission control circuit (131) configured to control the plurality of transmitting channels (111) to transmit a first ultrasonic wave to at least one detection point of a target object (20), wherein the first ultrasonic wave reflected by the target object (20) is defined as a second ultrasonic wave; and
a data processing circuit (132) electrically connected to the transmission control circuit (131), wherein the data processing circuit (132) is configured to control the ultrasonic transmitter (11) to receive the second ultrasonic wave and obtain a distance to the target object (20) according to a transmitting time of the first ultrasonic wave and a receiving time of the second ultrasonic wave.

11. The controller (13) of claim 10, wherein the transmission control circuit (131) is further configured to obtain transmitting-delay times of the plurality of transmitting channels (111) according to distances between the he plurality of transmitting channels (111) and the at least one detection point; and
the plurality of transmitting channels (111) is controlled to transmit the first ultrasonic wave according to the transmitting-delay times.

12. The controller (13) of claim 11, wherein the first ultrasonic wave is focused or divergent.

13. The controller (13) of claim 12, wherein the distance to the target object (20) is obtained according to a transmitting time of the first ultrasonic wave focused and a receiving time of the second ultrasonic wave; or

the distance to the target object (20) is obtained according to a transmitting time of the first ultrasonic wave divergent and a receiving time of the second ultrasonic wave; or
first ranging information of the target object (20) is obtained according to a transmitting time of the first ultrasonic wave focused and a receiving time of the second ultrasonic wave during a first ranging period, second ranging information of the target object (20) is obtained according to a transmitting time of the first ultrasonic wave divergent and a receiving time of the second ultrasonic wave during a second ranging period, and the distance to the target object (20) is obtained according to the first ranging information and the second ranging information.

14. The controller (13) of claim 13, wherein the distance to the target object (20) is obtained according to the first ranging information obtained in one first ranging period and the second ranging information obtained in a plurality of the second ranging periods.

15. The controller (13) of claim 10, wherein receiving-delay times of the plurality of transmitting channels (111) are obtained according to distances between the plurality of transmitting channels (111) and the at least one detection point; and
the plurality of transmitting channels (111) is controlled to receive the second ultrasonic wave according to the receiving-delay times.

FIG. 1

10

EP 4 006 581 A1

| | | | | |
|---|---|---|---|---|
| Ultrasonic transmitter | Transmitting/receiving switching circuit | Ultrasonic transmitting circuit | | Transmission control circuit |

11

Ultrasonic transmitter

Transmitting/ receiving switching circuit

Ultrasonic transmitting circuit

Amplifier ← Digital–analog converter ← Transmitting beamformer

13

131

Transmission control circuit

Controller

123

12 121

122

Ultrasonic receiving circuit

Amplifier → Analog–digital converter → Receiving beamformer

Data processing circuit

132

FIG. 2

Controlling at least one of the plurality of transmitting heads to transmit a first ultrasonic wave, the first ultrasonic wave being reflected by a target object when reaches the target object ⟋ S1

Controlling the ultrasonic transmitter to receive the second ultrasonic wave and obtaining a distance of the target object according to a transmitting time of the first ultrasonic wave and a receiving time of the second ultrasonic wave ⟋ S2

FIG. 3

FIG. 4

FIG. 5

FIG. 6

FIG. 7

FIG. 8

FIG. 9

FIG. 10

Europäisches
Patentamt

European
Patent Office

Office européen
des brevets

**EUROPEAN SEARCH REPORT**

Application Number

EP 21 20 1730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X <br><br> A | US 2005/117755 A1 (OKUNISHI AKIRA [JP] ET AL) 2 June 2005 (2005-06-02) <br> * abstract *; figures 1A-21 * <br> * paragraph [0002] – paragraph [0022] * <br> * paragraph [0061] – paragraph [0100] * <br> ----- | 1-7, 9-13,15 <br><br> 8,14 | INV. <br> G01S7/54 <br> G01S15/06 <br> G01S15/08 |
| X | EP 1 348 954 A1 (SCHLUMBERGER SERVICES PETROL [FR]) 1 October 2003 (2003-10-01) <br> * abstract *; figures 1-11 * <br> * paragraph [0002] – paragraph [0022] * <br> * paragraph [0024] – paragraph [0059] * <br> ----- | 1-6, 9-11,15 | |

TECHNICAL FIELDS
SEARCHED      (IPC)

G01S

The present search report has been drawn up for all claims

| Place of search | Date of completion of the search | Examiner |
|---|---|---|
| Munich | 24 March 2022 | Zaneboni, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 1730

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2022

| Patent document cited in search report | | Publication date | Patent family member(s) | | Publication date |
|---|---|---|---|---|---|
| US 2005117755 | A1 | 02-06-2005 | GB | 2408576 A | 01-06-2005 |
| | | | JP | 4307223 B2 | 05-08-2009 |
| | | | JP | 2005156508 A | 16-06-2005 |
| | | | US | 2005117755 A1 | 02-06-2005 |
| EP 1348954 | A1 | 01-10-2003 | AU | 2003226831 A1 | 13-10-2003 |
| | | | EP | 1348954 A1 | 01-10-2003 |
| | | | WO | 03083466 A2 | 09-10-2003 |

EPO FORM P0459

For more details about this annex : see Official Journal of the European Patent Office, No. 12/82